Europäisches Patentamt

European Patent Office

Office européen des brevets

(11) Publication number: **0 163 833**
**B1**

## (12) EUROPEAN PATENT SPECIFICATION

(45) Date of publication of patent specification: **19.04.89**

(21) Application number: **85103470.2**

(22) Date of filing: **09.09.81**

(60) Publication number of the earlier application in accordance with Art. 76 EPC: **0 060 271**

(51) Int. Cl.⁴: **F 16 B 37/12,** F 16 B 39/28 // F16B39/32

(54) Improved laminated lock nut.

(30) Priority: **16.09.80 US 187833**

(43) Date of publication of application: **11.12.85 Bulletin 85/50**

(45) Publication of the grant of the patent: **19.04.89 Bulletin 89/16**

(84) Designated Contracting States:
**DE FR GB**

(56) References cited:
FR-A-2 397 558
US-A-1 813 640
US-A-2 382 748
US-A-2 581 641
US-A-3 461 935

(73) Proprietor: **REYNOLDS, Richard Lee**
**6 Stratford Lane**
**Ho-Ho-Kus NJ 07423 (US)**

(72) Inventor: **REYNOLDS, Richard Lee**
**6 Stratford Lane**
**Ho-Ho-Kus NJ 07423 (US)**

(74) Representative: **Newens, Leonard Eric et al**
**F.J. CLEVELAND & CO. 40/43 Chancery Lane**
**London WC2A 1JQ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

My invention relates to a laminated lock nut utilizing laminations of hexagonal shaped hardened coned-disc springs, formed as a helix or tapped to match the bolt threads with which the nut cooperates.

Such a nut is, for example, sold by Peterson-American Corporation under the trademark "Elephant" it has stacked aligned multiple threaded discs retained by a steel outer hexagonal shaped cage.

Such a nut is free running until seated. Locking load is applied by additional rotation after seating, which compresses and partially flattens the conical spring discs with resulting mechanical interference on the thread flanks due to the change in hole size as the conical disc flattens. This results in thread interference that resists unloading that might otherwise occur as a result of vibration. Thus, the independently loaded conical spring threaded segments when flattened create a thread interference that tends to lock the nut against rotation, or loosening, when it is subjected to vibration.

As compared to other free spinning lock nuts, this nut effects a dimensional change under loading. It has a conical spring action that enables it to be counter rotated over half a turn or so without loss of total load or loss of inteference.

However, the known laminated lock nut, described above, requires for positive locking a secondary operation of adjustment to align holes for cotter key insertion, wiring, or requires mechanical nut deformation into a slot or recess. Further, in the prior art, the loading on the threads of the nut segments is non-uniform, to the extent such that the stress is concentrated in the first thread adjacent the bearing surface. At that position the stress may be as much as a factor of two or more higher than the average stress in the remaining threads.

GB—A—1,193,751 (& US—A—3461935) describes a self-locking nut comprising a polygonal housing or cage open at least at one end for passage of a screw thereinto and containing at least one conical segment disposed between end plates having an external contour to engage with the housing which are flat on the side while being contoured on the other to fit the abutting surface of a resilient plate. Similarly in DE—A—2829385 (& FR—A—2397558) a self-locking nut is provided including a cage with a retaining component and an annular thread-forming assembly. Inside the cage there are at least two ring-shaped components of equal size each of which is provided with a threaded section. The outer, lower and upper surfaces of the thread of each ring-shaped component, crossways to the axis, has flat continuous top surfaces, so that the strength of each component is instant.

US—A—1,813,640 describes a nut lock internally toothed with a ratchet profile in combination with a longitudinally grooved bolt shank wherein the nut lock comprises a nut with an interrupted annular surface, a ring within the nut having a tongue extending into the grooves in the bolt shank and a toothed portion for engagement with the annular surface, a tongue extending endwise from the ring in an external direction and a plate thereof, and tension means to induce the ring to effect the engagement referred to, the tongue serving as a handle to effect the disengagement of the ring.

According to the present invention there is provided a laminated nut composed of laminated conical spring segments retained in stacked aligned relationship by a surrounding cage so they act, in effect, as if they were a single threaded unit, having a top segment with a predetermined deflection when subjected to a predetermined axial load and a bottom segment characterised by the bottom segment having a different predetermined deflection from that of the top segment when subjected to the same axial load, the deflection of said top section by a predetermined amount being sufficient to more evenly distribute a load transmitted across said thread from bolt to said nut along the entire length of said threads in both said top and bottom segments.

The invention will now be described by way of example only with reference to the figures of the accompanying drawings, in which:—

Figure 1 is a side view, partly in section, of a spindle for a front drive automobile in which the tapered roller bearings are pre-loaded to a selected value by a laminated nut; and

Figure 2 is a sectional view of an improved laminated lock nut of the present invention, incorporating means for loading the threads of the conical spring segments more uniformly than was the case in known laminated nuts.

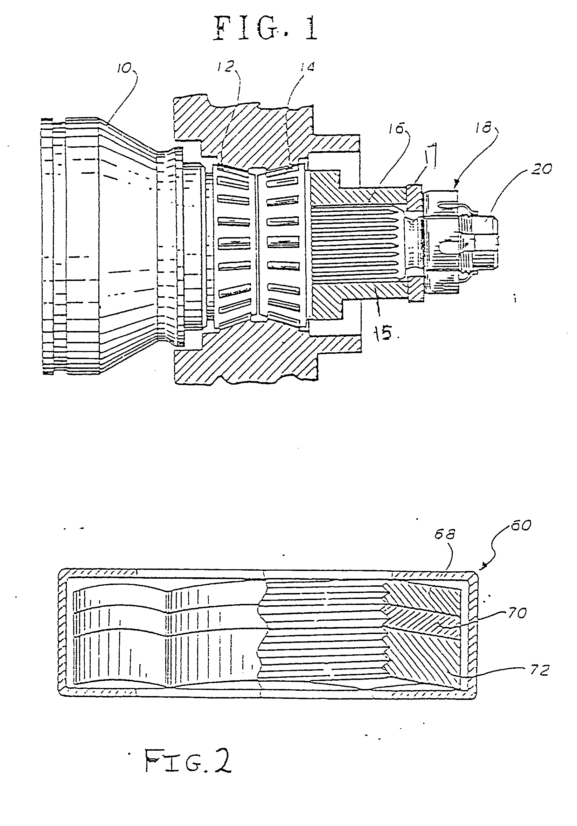

An application of the present invention is for spindles for front wheel drive automobiles. Figure 1 shows such a spindle 10, including tapered roller bearings 12, 14 which must, for proper operation, be pre-loaded to a selected value and then maintained pre-loaded at that value for long periods of operation, including operation while subject to vibration and shock.

A nut of the invention for pre-loading said bearings and maintaining the pre-load during operations of the automobile, is shown at 18.

After assembly of the spindle components, nut 18 is run down freely, either by hand or by tool, on the threaded end portion of a spindle bolt 20 until it seats against a washer which transmits the force to a collar or wheel hub 15 splined to the spindle at 16. The collar in turn transmits the pre-loaded force to the tapered roller bearings 12, 14. Such force may be, for example, about 5000 pound-force per sq. inch (34,474.0 kilonewtons per sq. metre or 3.44 hectobars).

After the nut seats down, it is tightened by a wrench until the force it applies to the bearing is increased to the selected pre-loading value. The spindle is placed in tension, and the tapered roller bearings are pre-loaded in compression. Tightening of nut 18 creates this tension and compression, to a degree determined by the nut tightening torque. The total clamp load generated by the nut is in about 17,000 to 22,000 pounds force (75619 to 97860 newtons).

The "turndown" of nut 18 will seat the bottom face of the nut flatly against the flat top of washer 17 on which it bears. It also, after it seats, will partially flatten conical spring washer segments and thereby create a spring force which gradually increases as the said segments become more and more flattened. The arrangement is such that when the nut 18 is fully tightened the conical spring washer segments are still not completely flat, but still have some bow. A typical bolt load design will flatten the conical spring washers segments by sixty to seventy per cent. They are not entirely flattened.

Formulae relating to loads necessary to flatten cone-spring discs show that, other things being held constant, the load to flatten will increase with disc thickness. This principle is utilized in Figure 2 to provide a nut of greater load carrying ability because of more uniform thread loading, or increased fatique life, and of greater self blocking characteristics.

In Figure 2 an improved laminated lock has a bottom cone shaped spring washer segment 72 of about twice the thickness of the other two segments 68 and 70. This provides a more even distribution of the load, from bolt to nut, over the length of the threaded sections 68, 70 and 72. Thus the nut is less likely to fail by shear of the bolt, stripping of the threads, or by fatigue failures. A substantial improvement relates with no additional cost, simply by the design arrangement.

Three laminated segments are shown in Figure 2 but less or more for example two or four could be used. An automatic lock plate as shown in Figures 1 to 7 of parent application EP—A—60271 could be added to the nut of Figure 2 if desired.

In the embodiment shown in the accompanying drawings the components, including the conical spring segments, are made of heat treated spring steel as a preferred material.

Previous designs of the Elephant type nut, used conical spring segments but did not relate the non-uniform nut loading of the segments to functional deflection characteristics. The possible concentration of loading, in a nut-bolt thread fastening, nearly two thirds of all tension loading occurs at the first thread engaged. This uneven loading of previous multiple element nuts caused accelerated deflection of the first element. The results of this accelerated deflected element caused high stress of the male threads of the bolt with possible thread shear results. Nuts previously made in this manner and commercially marketed would not meet SAE and IFI industrial requirements for strength. It is accepted practice that nut strength shear requirements must exceed bolt tensile strength so that the mode of failure is bolt breakage.

The present invention combines the established formulae used for predicting conical washer behaviour (see SCHNORR'S Handbook for Disc Springs) with proven load distribution characteristics in nut-bolt joint applications. This combination used in association with other nut bolt tolerance standards allows for design of spring washer segments with predictable behaviour related to bolt loading. The nut design as proposed is based upon near uniform washer segment deflection and loading bottom to top.

Advantages of the present lock-nut are firstly, the establishment of design criteria that will produce uniform deflection of the nut related to nut-bolt joint loading that will provide predictable load-deflection and resultant interference for blocking. This combination will provide nut strength relationships commensurate with established industry standards. The uniform loading of the nut top to bottom is accomplished by varying the washer segment thickness related to loading. The bottom washer with the greatest load would be the heavy member with subsequent washers reduced in thickness. This means that washer segment thickness can be a thickness that is greater than the pitch, more than a single pitch or less than a pitch; secondly, the provision of a parallel load surface for critical loading of joints that contain bearings. Heretofore, the nut required grinding or special surface finishes related to perpendicularity of the axis of the thread to provide uniform interface loading. The resilient action of this invention allows the interface surface to self seek for uniform loading; and thirdly, the provision of an inexpensive tool for the purpose of easily defeating the locking device to facilitate removal and reuse.

## Claims

1. A laminated nut (60) composed of laminated conical spring segments retained in stacked aligned relationship by a surrounding cage so they act, in effect, as if they were a single threaded unit, having a top segment (70) with a predetermined deflection when subjected to a predetermined axial load and a bottom segment (72) characterised by the bottom segment having a different predetermined deflection from that of the top segment when subjected to the same axial load, the deflection of said top section by a predetermined amount being sufficient to more evenly distribute a load transmitted across said thread from bolt to said nut along the entire length of said threads in both said top and bottom segments.

2. A laminated nut according to claim 1, further characterised by a top segment (70) having a predetermined thickness for producing a preselected load/deflection ratio and a bottom segment (72) having a second lamination of a predetermined thickness which is greater than the thickness of said first lamination by a preselected amount sufficient to cause the load from bolt to nut to be more evenly distributed over the length of both said first and said second laminations.

**Patentansprüche**

1. Geschichtete Mutter (60) aus geschichteten konischen Federsegmenten, die von einem umgebenden Käfig in einem ausgerichteten Stapel so gehalten sind, daß sie effecktiv wie eine einzige mit Gewinde versehene Einheit wirken, mit einem oberen Segment (70) mit einer bei einer im voraus festgelegten axialen Last vorbestimmten Durchbiegung und einem unteren Segment (72), dadurch gekennzeichnet, daß das untere Segment bei Einwirkung derselben axialen Last eine vom oberen Segment verschiedene im voraus festgelegte Durchbiegung erfährt, wobei die Durchbiegung des oberen Abschnitts um einen vorbestimmten Betrag ausreicht, um eine über das Gewinde von der Schraube auf die Mutter übertragene Last über die gesamte Länge des Gewindes sowohl im oberen als auch im unteren Segment gleichmäßiger zu verteilen.

2. Geschichtete Mutter nach Anspruch 1, ferner dadurch gekennzeichnet, daß ein oberes Segment (70) eine im voraus festgelegte Dicke zum Erzeugen eines im voraus festgelegten Last-Biegung-Verhältnisses hat und ein unteres Segment (72) eine zweite Schicht von vorbestimmter Dicke aufweist, die gegenüber der Dicke der ersten Schicht um einen vorgewählten Betrag größer ist, der ausreicht, um eine gleichmäßigere Verteilung der Last von der Schraube auf die Mutter über die Länge sowohl der ersten als auch der zweiten Schicht hervorzurufen.

**Revendications**

1. Un écrou statifié (60) constitué par des segments élastiques coniques statifiés maintenus empilés et alignés par une cage qui les entoure de sorte qu'ils agissent pratiquement comme s'ils constituaient une seule unité filetée qui comporte un segment supérieur (70) présentant un fléchissement déterminé lorsqu'il est soumis à une charge axiale déterminée et un segment inférieur (72), caractérisé en ce que le segment inférieur présente un fléchissement déterminé différent de celui du segment supérieur avant lorsqu'il est soumis à la même charge axiale, le fléchissement de cette section supérieure d'une quantité déterminée étant suffisant pour assurer une répartition plus uniforme d'une charge transmise par le filetage depuis le boulon jusqu'à l'écrou sur toute la longueur des filetages dans les segments, tant supérieur qu'inférieur.

2. Un écrou stratifié selon la revendication 1, caractérisé en outre par un segment supérieur (70) présentant une épaisseur déterminée pour produire un taux charge/fléchissement donné et un segment inférieur (72) comportant une deuxième partie stratifiée d'une épaisseur déterminée qui dépasse l'épaisseur de la première partie stratifiée d'une quantité déterminée qui est suffisante pour que la charge transmise du boulon à l'écrou soit répartie d'une manière plus uniforme sur la longueur tant de la première que de la seconde partie stratifiée.

FIG. 1

FIG.2

1